# EUROPÄISCHE PATENTSCHRIFT

(11) **EP 3 837 144 B1**
(45) Veröffentlichungstag und Bekanntmachung des Hinweises auf die Patenterteilung: **15.05.2024**
(21) Anmeldenummer: 19734731.3
(22) Anmeldetag: 22.06.2019
(51) Int. Cl.: B60T 8/1766

(54) **VERFAHREN ZUM BETREIBEN EINES BREMSSYSTEMS UND BREMSSYSTEM**
METHOD FOR OPERATING A BRAKING SYSTEM AND BRAKING SYSTEM
PROCÉDÉ POUR FAIRE FONCTIONNER UN SYSTÈME DE FREINAGE ET SYSTÈME DE FREINAGE

(30) Priorität: 13.08.2018 DE 102018213592
(43) Veröffentlichungstag der Anmeldung: 23.06.2021
(73) Patentinhaber: Robert Bosch GmbH, 70442 Stuttgart (DE)
(72) Erfinder: BECKER, Jan, 71522 Backnang (DE); KLUG, Andreas, 74199 Untergruppenbach (DE); POGGENBURG, Ruediger, 71665 Vaihingen/Enz (DE); ZOEBELE, Andreas, 71706 Markgroeningen (DE); EISELE, Achim, 74394 Hessigheim (DE); KRANICH, Matthias, 71723 Grossbottwar (DE); WEINGART, Philipp, 74080 Heilbronn (DE)
(86) Internationale Anmeldenummer: PCT/EP2019/066564
(87) Internationale Veröffentlichungsnummer: WO 2020/035200

(56) Entgegenhaltungen:
- EP-A1- 2 581 259
- US-A- 5 011 236
- US-A- 5 772 289
- US-A1- 2009 134 698

## Beschreibung

### Gebiet der Erfindung

Die Erfindung betrifft ein Verfahren zum Betreiben eines Bremssystems und ein Bremssystem.

### Stand der Technik

Ein Fahrzeug kann ein Anti-Blockier-System aufweisen. Das Anti-Blockier-System kann durch Eingriffe in ein Bremssystem des Fahrzeugs ein dauerhaftes Blockieren der Räder des Fahrzeugs verhindern. Dadurch bleibt das Fahrzeug beim Bremsen lenkbar.

US 5,772,289 beschreibt eine Fahrzeugbremskraftsteuerung. US 5,011,236 beschreibt ein Verfahren zum Ausführen einer Last-abhängigen Bremsregulierung von Bremsen an einem Fahrzeug mit einem Antiblockiersystem. US 2009/0134698 A1 beschreibt ein Verfahren für eine Bremsdruckverteilung zwischen Achsen eines Fahrzeugs.

### Offenbarung der Erfindung

Vor diesem Hintergrund werden mit dem hier vorgestellten Ansatz ein Verfahren zum Betreiben eines Bremssystems und ein Bremssystem, sowie schließlich ein entsprechendes Computerprogrammprodukt und ein maschinenlesbares Speichermedium gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, bei einem schnellen Anbremsen eines Fahrzeugs eine Zeitdauer zu Es wird ein Verfahren zum Betreiben eines Bremssystems eines Fahrzeugs vorgeschlagen, das dadurch gekennzeichnet ist, dass unter Verwendung eines einen Vordruck am Bremssystem abbildenden Vordruckwerts und einer eine Bremsdynamik des Fahrzeugs abbildenden Verarbeitungsvorschrift ein Vorsteuerwert für einen Bremsdruck des Bremssystems eingestellt wird, wobei ein Vorsteuergradient des Vorsteuerwerts unter Verwendung eines Vordruckgradienten des Vordruckwerts und der Verarbeitungsvorschrift eingestellt wird, wobei die Verarbeitungsvorschrift einen fahrzeugmodellspezifischen zeitlichen Normalkraftverlauf beim Bremsen des Fahrzeugs und/oder eine fahrzeugmodellspezifische Nickdynamik beim Bremsen des Fahrzeugs abbildet, wobei pro Radbremszylinder ein Sollwert des Bremsdrucks unter Verwendung des Vorsteuerwerts und einer Ableitung der Raddrehzahl des von dem Radbremszylinder gebremsten Rads individuell geregelt wird.

Ideen zu Ausführungsformen der vorliegenden Erfindung können unter anderem als auf den nachfolgend beschriebenen Gedanken und Erkenntnissen beruhend angesehen werden.

Eine Bremskraft an einem Rad eines Fahrzeugs kann größer sein, als eine Haftreibung des Rads auf seinem Untergrund. Ein Schlupf des Rads auf dem Untergrund wird dann größer als ein tolerierbarer Schlupf. Damit das Fahrzeug steuerbar bleibt, greift eine Anti-Blockier-Funktion eines Bremssystems des Fahrzeugs ein und verringert einen Bremsdruck in einem Radbremszylinder des Rads, bis die Bremskraft wieder kleiner ist als die Haftreibung. Damit ist auch der Schlupf kleiner als der tolerierbare Schlupf und das Fahrzeug kann wieder gesteuert werden. Anschließend wird der Bremsdruck wieder erhöht, bis der Schlupf wieder größer als der tolerierbare Schlupf ist. Damit beginnt ein neuer Eingriffszyklus der Anti-Blockier-Funktion. Diese Zyklen werden wiederholt ausgeführt. Dadurch wird das Fahrzeug mit der auf dem Untergrund maximal möglichen Verzögerung abgebremst.

Die Haftreibung wird durch eine Normalkraft am Rad beeinflusst. Die Normalkraft ist abhängig von einer Gewichtsverteilung des Fahrzeugs und einer Bremsdynamik des Fahrzeugs. Da ein Schwerpunkt des Fahrzeugs einen Abstand zum Boden aufweist, werden aufgrund einer Massenträgheit des Fahrzeugs beim Bremsen die Räder an einer Vorderachse des Fahrzeugs belastet, während die Räder an einer Hinterachse des Fahrzeugs entlastet werden. Zusätzlich ist das Fahrzeug durch seine gefederten und gedämpften Radaufhängungen und den Luftreifen ein schwingungsfähiges System, das durch ein beim Bremsen eingeleitetes Nickmoment zum Schwingen angeregt wird. Beim Einfedern werden die Radaufhängungen und Luftreifen komprimiert, beim Ausfedern werden die Radaufhängungen und Luftreifen entlastet. Während ein Rad einfedert, ist die Normalkraft höher, als wenn das Rad ausfedert. Daher kann das Rad beim Einfedern eine höhere Bremskraft auf den Untergrund übertragen als beim Ausfedern. Diese Schwingung überlagert die Gewichtsverteilung beim Bremsen.

Ein Vordruck wird zwischen einem Hauptbremszylinder des Bremssystems und einem Ventilblock des Bremssystems von einem Drucksensor des Bremssystems erfasst. Der Vordruck kann also durch ein Betätigen eines Bremspedals eingestellt werden. Ebenso kann ein Fahrerassistenzsystem des Fahrzeugs den Vordruck einstellen, beispielsweise indem der Hauptbremszylinder anderweitig betätigt wird oder indem ein separater Geber angesteuert wird.

Bei dem hier vorgestellten Ansatz wird der am Rad wirkende Vordruck durch die Verarbeitungsfunktion an die aufgrund der Gewichtsverteilung und der Dynamik des Fahrzeugs mögliche Haftreibung angepasst, um ein Blockieren der Räder zu vermeiden. Der angepasste Vordruck kann als Vorsteuerdruck bezeichnet werden.

Pro Achse des Fahrzeugs kann ein Vorsteuerwert eingestellt werden. Durch die Gewichtsverlagerung beim Bremsen kann an der Hinterachse weniger Bremskraft übertragen werden als an der Vorderachse. Zusätzlich unterscheidet sich die Dynamik der Hinterachse von der Dynamik der Vorderachse.

Die Verarbeitungsvorschrift kann einen fahrzeugmodellspezifischen zeitlichen Normalkraftverlauf beim Bremsen des Fahrzeugs abbilden. Verschiedene Fahrzeugmodelle weisen unterschiedliche Bremsdynamiken auf. Die Verarbeitungsvorschrift kann von Fahrzeugmodell zu Fahrzeugmodell unterschiedlich sein. Die Verarbeitungsvorschrift kann eine fahrzeugmodellspezifische Nickdynamik beim Bremsen des Fahrzeugs abbilden. Je nach Fahrwerksabstimmung kann das Fahrzeug unterschiedliche Nickdynamiken aufweisen. Die Fahrwerksabstimmung kann in der Verarbeitungsvorschrift abgebildet sein.

Ein Vorsteuergradient des Vorsteuerwerts wird unter Verwendung eines Vordruckgradienten des Vordruckwerts und der Verarbeitungsvorschrift eingestellt.

Beim scharfen Anbremsen, also beispielsweise wenn das Bremspedal sehr schnell getreten wird, erhöht sich die Bremskraft sehr schnell und kann deutlich zu hoch für den jeweiligen Untergrund werden. Der Schlupf kann dann sehr groß werden und das Rad kann blockieren. Herkömmlicherweise senkt die Anti-Blockier-Funktion den Bremsdruck bei seinem ersten Eingriff sehr stark ab, um das Rad am Blockieren zu hindern beziehungsweise, um das Rad wieder zum Drehen zu bringen. Aufgrund der Trägheit des Gesamtsystems vergeht eine gewisse Zeit, bis die Anti-Blockier-Funktion stabil eingeregelt ist. In dieser Zeit wird das Fahrzeug nicht optimal verzögert. Bei dem hier vorgestellten Ansatz bildet die Verarbeitungsfunktion einen Zusammenhang zwischen dem Vordruck und dem Vorsteuerdruck ab, bei dem die Bremskraft kontrolliert ansteigt und die Anti-Blockier-Funktion beim Erreichen des tolerierbaren Schlupfs schnell eingreifen kann.

Der Vorsteuergradient kann begrenzt werden, wenn der Vordruckgradient größer als ein Grenzgradient ist. Bis zu einem vorbestimmten Grenzgradient kann die Anti-Blockier-Funktion schnell genug reagieren und es ist keine Anpassung des Vorsteuerdrucks erforderlich. Ab dem Grenzgradient kann der Vorsteuergradient um einen Faktor geringer eingestellt werden, als der Vordruckgradient. Der Vorsteuergradient kann auch auf einen Maximalgradient begrenzt werden. Der Vorsteuergradient kann stufenweise begrenzt werden. Der begrenzte Vorsteuergradient kann einem vorbestimmten Gradientenverlauf folgen.

Pro Radbremszylinder wird ein Sollwert des Bremsdrucks unter Verwendung des Vorsteuerwerts und einer Raddrehzahl des von dem Radbremszylinder gebremsten Rads individuell geregelt. Eine Raddrehzahl kann direkt am Rad erfasst werden. Die Raddrehzahlen von verschiedenen Rädern können unterschiedlich sein. Die Raddrehzahl kann mit einer hohen Dynamik erfasst werden. Im Gegensatz zum Schlupf, der nur indirekt geschätzt werden kann, kann die Raddrehzahl direkt gemessen werden. Durch die Verwendung der Ableitung der Raddrehzahl kann eine schnelle Regelung erreicht werden. Wenn die Raddrehzahl zu schnell sinkt, hat das Rad nach kurzer Zeit übermäßigen Schlupf.

Der Sollwert kann während einer Anbremszeit entsprechend dem Vorsteuerwert eingestellt werden. Nach Ablauf der Anbremszeit kann der Sollwert unter Verwendung des Vorsteuerwerts und der Ableitung der Raddrehzahl geregelt werden. Zu Beginn des Anbremsvorgangs findet aufgrund von Fahrwerks- und Reifeneigenschaften ein hochdynamischer Einschwingvorgang statt, der über die Raddrehzahl erfasst wird. Um dies für die Regelung auszublenden kann die Raddrehzahl bis zu einer vorbestimmten Anbremszeit ignoriert werden. Nach der Anbremszeit kann dann die Regelung unter Verwendung der Raddrehzahl gestartet werden.

Die Raddrehzahl kann eine Radgeschwindigkeit repräsentieren. Die Änderung der Raddrehzahl bzw. die Ableitung kann eine Radverzögerung repräsentieren. Der Sollwert kann so geregelt werden, dass eine Radsollverzögerung zusätzlich mittels einem Rad-Sollschlupfkorridor überwacht wird. Ein Rad-Sollschlupfkorridor kann durch eine über die Zeit sich ändernde minimale / maximale Rad-Sollschlupfschwelle definiert sein. Verläuft das Rad innerhalb des Sollschlupfkorridors wird der Soll-Raddruckgradient basierend auf der Sollradverzögerung berechnet. Werden die Minimal- / Maximalgrenzen des Sollschlupfkorridors unter- / überschritten, wird der Raddruckgradient auf Basis einer sollschlupfabhängigen Strategie berechnet.

Das Verfahren kann beispielsweise in Software oder Hardware oder in einer Mischform aus Software und Hardware beispielsweise in einem Steuergerät implementiert sein.

Der hier vorgestellte Ansatz schafft ferner ein Bremssystem, das dazu ausgebildet ist, um die Schritte einer Variante des hier vorgestellten Verfahrens in entsprechenden Einrichtungen durchzuführen, anzusteuern bzw. umzusetzen.

Das Bremssystem kann dazu eine elektrische Einrichtung mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, aufweisen. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des Bremssystems und des Verfahrens in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt ein Blockschaltbild eines Bremssystems gemäß einem Ausführungsbeispiel;
Fig. 2 zeigt eine Darstellung eines Bremsdruckverlaufs welcher gemäß einem Ausführungsbeispiel geregelt wurde;
Fig. 3 zeigt eine Darstellung eines unter Verwendung einer Raddrehzahl geregelten Bremsdruckverlaufs gemäß einem Ausführungsbeispiel; und
Fig. 4 zeigt eine Darstellung eines Raddrehzahlverlaufs, welche gemäß einem Ausführungsbeispiel geregelt wurde.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

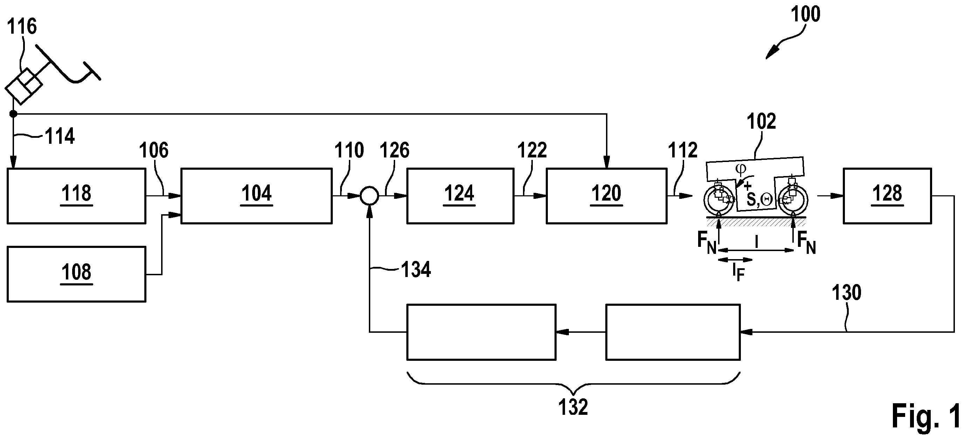

Fig. 1 zeigt ein Blockschaltbild eines Bremssystems 100 eines Fahrzeugs 102 gemäß einem Ausführungsbeispiel. Das Bremssystem 100 ist dazu ausgebildet, ein Verfahren gemäß dem hier vorgestellten Ansatz auszuführen. Dazu weist das Bremssystem 100 eine Einstelleinrichtung 104 auf, in der unter Verwendung eines Vordruckwerts 106 und einer Verarbeitungsvorschrift 108 ein Vorsteuerwert 110 für einen Bremsdruck 112 des Bremssystems 100 eingestellt wird. Dabei bildet der Vordruckwert 106 einen Vordruck 114 am Bremssystem 100 ab, während die Verarbeitungsvorschrift 108 eine Bremsdynamik des Fahrzeugs 102 abbildet.

Der Vordruckwert 106 wird von einem zwischen einem Hauptbremszylinder 116 des Fahrzeugs 102 und dem Bremssystem 100 angeordneten Drucksensor 118 erfasst und als elektrisches Signal beziehungsweise Datenwort für die Einrichtung 104 bereitgestellt.

Der Bremsdruck 112 wird unter Verwendung des Vorsteuerwerts 110 in einem Ventilblock 120 des Bremssystems 100 eingestellt. Dazu ist der Ventilblock 120 hydraulisch mit dem Hauptbremszylinder 116 verbunden. Der Ventilblock 120 weist Einlassventile und Auslassventile auf, über die der Bremsdruck 112 an Radbremszylindern des Fahrzeugs 102 eingestellt werden kann. Die Ventile können dabei Proportionalventile sein, an denen ein Durchflussquerschnitt gezielt eingestellt werden kann. Die Einlassventile sind stromlos offen. In offenem Zustand ist der Bremsdruck 112 gleich dem Vordruck 114. Wenn an den Einlassventilen der Durchflussquerschnitt verengt wird, sinkt der Bremsdruck 112 gegenüber dem Vordruck 114. Die Auslassventile sind stromlos geschlossen. Die Auslassventile werden geöffnet, wenn die Einlassventile geschlossen sind. Durch die Auslassventile kann der Bremsdruck 112 schnell und unabhängig vom Vordruck 114 verringert werden. Die Ventile des Ventilblocks 120 werden elektrisch über Steuersignale 122 betätigt. Die Steuersignale 122 werden durch einen Ventiltreiber 124 unter Verwendung des Vorsteuerwerts 110 erzeugt. Beispielsweise werden die Ventile des Ventilblocks 120 durch ein pulsweitenmoduliertes Steuersignal 122 angesteuert.

Der Bremsdruck 112 wird hydraulisch zu den Radbremszylindern an Rädern des Fahrzeugs 102 übertragen. Jeder Radbremszylinder betätigt Bremsbeläge, die an einer mit dem jeweiligen Rad gekoppelten Bremsscheibe oder Bremstrommel reiben. Die Reibung erzeugt an dem drehenden Rad ein Bremsmoment. Über einen Rollradius des Rads bewirkt das Bremsmoment eine Bremskraft des Rads.

Eine Masse des Fahrzeugs 102 resultiert in einer Gewichtskraft an den Rädern. Eine Gewichtsverteilung des Fahrzeugs 102 bestimmt, welcher Anteil der Gewichtskraft an einem Rad als Normalkraft wirkt. Die Normalkraft und eine Bodenbeschaffenheit bestimmen eine Reibungskraft, die von dem Rad auf den Untergrund übertragen werden kann. Wenn die Bremskraft größer als eine maximale Haftreibungskraft ist, rutscht das Rad durch, da eine Gleitreibungskraft auf dem gleichen Untergrund in der Regel geringer als die Haftreibungskraft ist. Bevor das Rad die Haftung verliert, entsteht Schlupf. Der Schlupf resultiert beispielsweise aus einer Verformung von Profilblöcken eines Reifens des Rads und/oder einem Walken des Reifens in sich.

Durch den Schlupf dreht sich das Rad beim Bremsen langsamer, als es sich bei einer Geschwindigkeit des Fahrzeugs 102 drehen müsste. Wenn das Rad durchrutscht beziehungsweise blockiert, dreht sich das Rad nicht, obwohl das Fahrzeug 102 sich bewegt.

Wenn das Fahrzeug 102 durch die Bremskraft gebremst wird, wirkt aufgrund einer Massenträgheit des Fahrzeugs 102 eine der Bremskraft entgegen gerichtete Trägheitskraft. Die Trägheitskraft greift vereinfacht ausgedrückt an einem Schwerpunkt des Fahrzeugs 102 an. Der Schwerpunkt ist jedoch von einem Angriffspunkt der Bremskraft beziehungsweise den Angriffspunkten der Bremskräfte, also den Kontaktstellen der Räder mit dem Untergrund beabstandet. Aufgrund dieses Abstands resultiert ein Drehmoment am Fahrzeug 102, das als Nickmoment bezeichnet werden kann. Das Nickmoment verursacht an den Rädern Nickkräfte, welche die Gewichtskräfte an den Rädern überlagern.

Die Räder sind über Radaufhängungen gefedert gelagert und die luftgefüllten Reifen der Räder wirken als Luftfedern. Die Radaufhängungen sind zusätzlich durch Stoßdämpfer gedämpft. Das Fahrzeug 102 ist also ein schwingungsfähiges System und wird durch das Nickmoment zum Schwingen angeregt. Die Nickkräfte können positiv oder negativ sein. Durch positive Nickkräfte werden die Räder zusätzlich belastet. Durch negative Nickkräfte werden die Räder entlastet. Durch eine positive Nickkraft steigt die Normalkraft an einem Rad und die Radaufhängung federt ein, während der Reifen komprimiert wird. Durch eine negative Nickkraft sinkt die Normalkraft an einem Rad und die Radaufhängung federt aus, während sich der Reifen ausdehnt.

Ein Schwingungsverhalten dieses Systems ist in der Verarbeitungsvorschrift 108 abgebildet. Durch die Verarbeitungsvorschrift 108 ist ein zeitlicher Verlauf der Normalkraft bekannt. Die Verarbeitungsvorschrift 108 kann beispielsweise durch Versuche ermittelt werden.

Durch den zeitlichen Verlauf der Normalkraft ergibt sich ebenfalls ein zeitlicher Verlauf der erreichbaren Bremskraft. Beim Einfedern eines Rads kann dabei mehr Bremskraft erreicht werden, als beim Ausfedern des Rads. Durch die Verarbeitungsvorschrift 108 wird der Vorsteuerwert 110 beim Einfedern erhöht und beim Ausfedern verringert.

In einem Ausführungsbeispiel wird für die vorderen Räder beziehungsweise für eine Vorderachse des Fahrzeugs 102 ein vorderer Vorsteuerwert 110 eingestellt. Für die hinteren Räder beziehungsweise eine Hinterachse des Fahrzeugs 102 wird ein hinterer Vorsteuerwert 110 eingestellt. Dadurch wird das oft gegenläufige Einfedern und Ausfedern der Achsen berücksichtigt.

In einem Ausführungsbeispiel werden Sollwerte 126 für die Bremsdrücke 112 der einzelnen Räder unter Verwendung des jeweiligen Vorsteuerwerts 110 und einer Ableitung einer Raddrehzahl des jeweiligen Rads individuell geregelt. Dazu werden die Drehzahlen der Räder von Sensoren 128 überwacht und in Drehzahlwerten 130 abgebildet. Unter Verwendung der Ableitung der Drehzahlwerte 130 wird in einem Regler 132 des Bremssystems 100 für jedes Rad ein individueller Sollwert 126 für den Bremsdruck 112 geregelt. Dazu wird ein Korrekturfaktor 134 bestimmt, mit dem der jeweilige Vorsteuerwert 110 verrechnet wird, um den Sollwert 126 zu erhalten.

Wenn zu Beginn eines Bremsvorgangs der Vordruck 114 zu schnell ansteigt, wird an den Rädern zu schnell ein zu großes Bremsmoment erzeugt und die Räder blockieren. Wenn die Einlassventile erst geschlossen werden, wenn die Räder blockieren, muss über die Auslassventile viel Bremsdruck 112 abgebaut werden, bis die Bremsdruckspitze abgebaut ist und sich die Räder wieder drehen. Aufgrund der Trägheit der Räder und des Gesamtsystems dauert dieser Vorgang. Erst wenn die Räder wieder Haftreibung aufweisen, kann der Bremsdruck 112 erneut erhöht werden, um zu einer normalen Anti-Blockier-Regelung des Bremssystems 100 zu kommen.

Daher wird in einem Ausführungsbeispiel zusätzlich zu der Berücksichtigung des Schwingungsverhaltens des Fahrzeugs 102 ein Vorsteuergradient des Vorsteuerwerts 110 in Abhängigkeit von einem Vordruckgradienten des Vordrucks 114 eingestellt. Wenn der Vordruck 114 zu schnell ansteigt und einen Grenzdruck überschreitet, wird der Vorsteuerwert 110 mit einem gegenüber dem Vordruck 114 reduzierten Vorsteuergradient eingestellt. Dadurch werden die Durchflussquerschnitte der Einlassventile rechtszeitig zumindest verengt und die Bremsdruckspitze kann vermieden werden. Durch den langsameren Anstieg des Bremsdrucks 112 kann die Anti-Blockier-Regelung eingreifen, ohne dass ein Rad zuvor blockiert, wenn der Schlupf an dem Rad größer als ein Zielschlupf ist. Der Vorsteuergradient kann beispielsweise als eine Funktion der Zeit eingestellt werden.

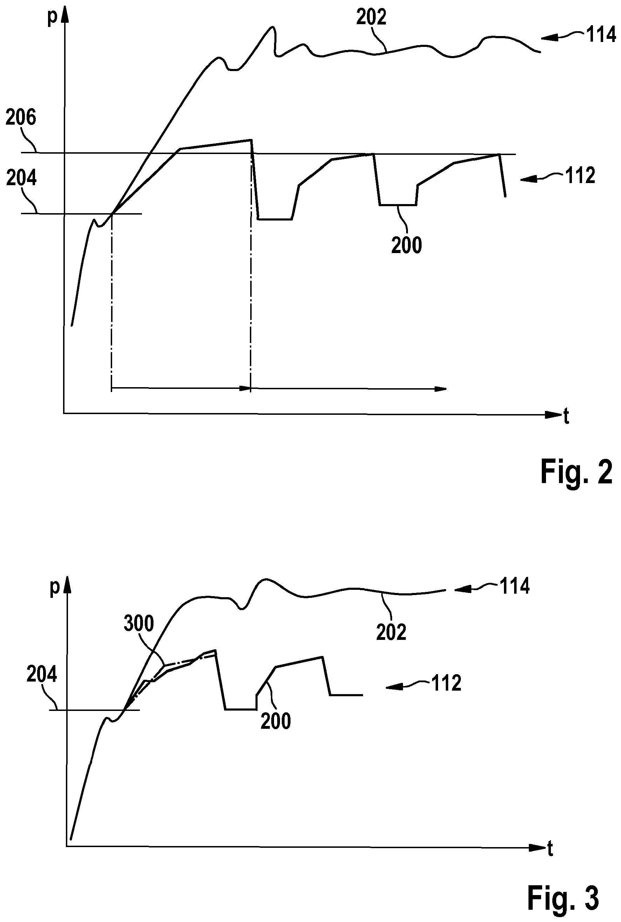

Fig. 2 zeigt eine Darstellung eines Bremsdruckverlaufs 200, der gemäß einem Ausführungsbeispiel geregelt wurde. Der Bremsdruckverlauf 200 repräsentiert einen zeitlichen Verlauf zumindest eines der Bremsdrücke 112 in Fig. 1 und kann beispielsweise an einem Radbremszylinder eines Bremssystems, wie es beispielsweise in Fig. 1 dargestellt ist, erfasst werden. Der Bremsdruckverlauf 200 ist in einem Diagramm dargestellt, das auf seiner Abszisse die Zeit t und auf seiner Ordinate einen Druck p angetragen hat. Weiterhin ist in dem Diagramm ein Vordruckverlauf 202 dargestellt. Der Vordruckverlauf 202 repräsentiert einen zeitlichen Verlauf des Vordrucks 114 in Fig. 1. Der Vordruckverlauf 202 wird bei dem in Fig. 1 dargestellten Bremssystem durch den Drucksensor am Eingang des Bremssystems aufgezeichnet.

Bis zu einem Grenzdruck 204, stimmen der Bremsdruckverlauf 200 und der Vordruckverlauf 202 überein. Wenn der Vordruck 114 größer als der Grenzdruck 204 ist, wird der Vorsteuerwert eingestellt, um den Bremsdruck 112 zu beeinflussen. Als zusätzliches Kriterium zum Einstellen des Vorsteuerwerts wird der Vordruckgradient beziehungsweise eine Geschwindigkeit überwacht, mit der der Vordruck 114 ansteigt. Der Vorsteuerwert wird eingestellt, wenn der Vordruckgradient größer als ein Grenzgradient ist.

Hier sind beide Kriterien erfüllt. Daher wird der Vorsteuerwert oberhalb des Grenzdrucks 204 als Funktion der Zeit so eingestellt, dass der Bremsdruck 112 weniger schnell ansteigt als der Vordruck 114. Hier beschreibt die Funktion für den Bremsdruckverlauf 200 oberhalb des Grenzdrucks 204 zwei Abschnitte mit unterschiedlichen Gradienten. Dabei ist der erste Gradient größer als der zweite Gradient. Die zwei Abschnitte nähern eine Kurvenform an.

Der Bremsdruck 112 weist also oberhalb des Grenzdrucks 204 einen geringeren Bremsdruckgradienten auf als der Vordruck 114. Der Bremsdruck 112 erreicht oberhalb des Grenzdrucks 204 einem Wert, bei dem der Schlupf am Rad größer als der Zielschlupf ist. Dann greift das ABS des Fahrzeugs ein und senkt den Bremsdruck 112 schnell wieder ab, um ihn anschließend zyklisch bis an einen ABS-Regeldruck 206 anzunähern und wieder abzusenken.

Fig. 3 zeigt eine Darstellung eines unter Verwendung einer Raddrehzahl geregelten Bremsdruckverlaufs 200 gemäß einem Ausführungsbeispiel. Die Darstellung entspricht dabei im Wesentlichen der Darstellung in Fig. 2. Zusätzlich dazu wird der Bremsdruck 112 ab dem Grenzdruck 204 unter Verwendung der Ableitung der Raddrehzahl geregelt, sodass die Raddrehzahl innerhalb eines Schlupfkorridors absinkt. Sinkt die Raddrehzahl nicht schnell genug, wird der Sollwert für den Bremsdruck über einen Korrekturfaktor erhöht. Sinkt die Drehzahl zu schnell, wird der Sollwert über den Korrekturfaktor gesenkt. Der tatsächliche Bremsdruckverlauf 200 schwankt durch die Regelung um einen über den Vorsteuerwert vorgegebenen Vorsteuerverlauf 300.

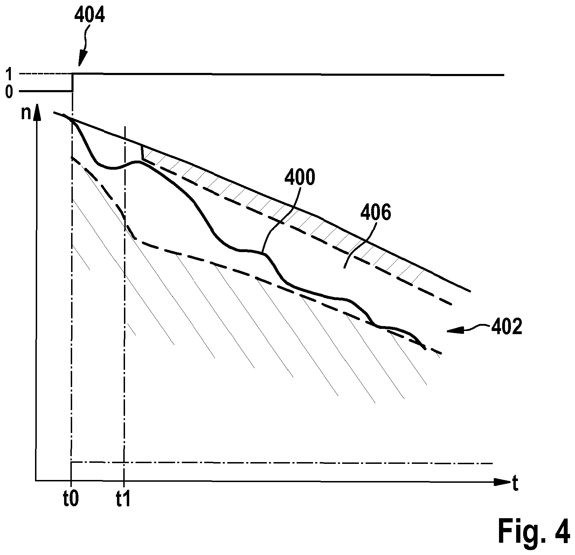

Fig. 4 zeigt eine Darstellung eines Raddrehzahlverlaufs 400, welcher gemäß einem Ausführungsbeispiel geregelt wurde. Der Raddrehzahlverlauf 400 ist in einem Diagramm aufgetragen, das auf seiner Abszisse die Zeit t und auf seiner Ordinate eine Raddrehzahl 402 aufgetragen hat. Der Raddrehzahlverlauf 400 bildet also einen Verlauf einer Raddrehzahl 402 eines Rads über die Zeit t ab. Der Raddrehzahlverlauf 400 korrespondiert dabei im Wesentlichen mit dem Bremsdruckverlauf in Fig. 3. Zu einem Zeitpunkt t0 wird die Vorsteuerung des Bremsdrucks gemäß dem hier vorgestellten Ansatz aktiviert. Die Aktivierung ist hier durch einen logischen Zustandswechsel 404 von logisch null zu logisch eins dargestellt.

Bis zu einem Zeitpunkt t1 wird der Bremsdruck nur entsprechend dem Vorsteuerwert eingestellt. Am Zeitpunkt t1 wird die Regelung des Bremsdrucks über die Ableitung der Raddrehzahl 402 aktiviert. Die Raddrehzahl 402 wird dabei über einen Drehzahlsensor am Rad erfasst und aus der Ableitung der Raddrehzahl 402 ein Korrekturfaktor für den Vorsteuerwert berechnet. Der Korrekturfaktor und der Vorsteuerwert zusammen ergeben dann einen geregelten Sollwert, über den im Ventilblock der Bremsdruck eingestellt wird.

Die Raddrehzahl 402 wird dabei innerhalb eines Schlupfkorridors 406 geregelt. Der Schlupfkorridor 406 repräsentiert einen Toleranzbereich um einen gewünschten Drehzahlverlauf. Der gewünschte Drehzahlverlauf entspricht einer näherungsweise linearen Abnahme der Raddrehzahl 402 über die Zeit t. Die lineare Abnahme entspricht dabei einer konstanten Verzögerung.

Wenn der aktuelle Schlupf 402 unterhalb des Schlupfkorridors 406 liegt, wird der Korrekturfaktor so angepasst, dass der Bremsdruck unter den durch den Vorsteuerwert vorgegebenen Druck sinkt, da das Rad zu viel Schlupf aufweist. Durch den gesenkten Bremsdruck steigt die Raddrehzahl 402 wieder in den Schlupfkorridor 406. Wenn die aktuelle Raddrehzahl 402 oberhalb des Schlupfkorridors 404 liegt, wird der Korrekturfaktor so eingestellt, dass der Bremsdruck über den durch den Vorsteuerwert vorgegebenen Druck steigt, da das Rad zu wenig Bremskraft auf den Untergrund überträgt. Durch den gestiegenen Bremsdruck wird wieder mehr Bremskraft erzeugt und die Raddrehzahl 402 sinkt wieder in den Schlupfkorridor06.

In einem Ausführungsbeispiel wird eine Abweichung der Ableitung der Raddrehzahl 402 von einer dem aktuellen Zeitwert zugeordneten Solldrehzahländerung des Drehzahlverlaufs in den Korrekturfaktor umgerechnet. Dadurch wird der Korrekturfaktor unmittelbar geregelt und die Raddrehzahl 402 bleibt innerhalb des Schlupfkorridors 406.

Mit anderen Worten wird eine ABS Anregeloptimierung auf einen Hochreibwert mittels Bremskraft-Gradienten-Begrenzung (Pre-Control Action - PCA) vorgestellt.

Bei hohen Anbremsgradienten auf hohem Reibwert, also einer schnellen Erhöhung des Bremswunschs, ist es von Vorteil, den Bremskraftgradient an der Radbremse zu begrenzen, um einen möglichst optimalen Eintritt in die ABS Regelung zu gewährleisten. Zu steile Kraftaufbaugradienten erzeugen ansonsten einen zu hohen Radschlupf und einen in Folge großen ersten Druckabbau zum Stabilisieren des Rads bei Eintritt ins ABS. Durch das Begrenzen des Bremskraftgradienten kann eine optimale Reibwertausnutzung und eine Bremswegverkürzung erreicht werden.

Die Bremskraft-Gradienten-Begrenzung PCA wird gestartet, wenn eine schnelle Fahrervordruckerhöhung detektiert wird und am Rad ein gewisser Bremsschlupf und ein gewisses Bremsmoment erreicht wurden. Die Bremskraft-Gradienten-Begrenzung wird dann realisiert, indem das Einlassventil angesteuert wird und mit einer Druckaufbaupulsreihe der weitere Anstieg des Radbremsdruckes geregelt wird. Die Regelung des Sollgradienten der Aufbaupulsreihe wird in Abhängigkeit der Ableitung der Raddrehzahl berechnet. Die Maßnahme ist achsweise, also für Vorder- und Hinterachse aktivier- und parametrisierbar. Die Funktion kann ebenfalls bei automatischen Notbremsungen aktiviert werden, wenn der Vordruck nicht über den Fahrer, sondern über das ESP System oder einen I-Booster erzeugt wird.

Für Fahrzeuge mit starkem Nickverhalten beim Anbremsen, wie frontlastige Fahrzeuge mit hohem Schwerpunkt und weichem Fahrwerk kann die Bremskraft-Gradienten-Begrenzung auch als Nickdämpfmaßnahme genutzt werden, indem der Aufbaugradient bewusst deutlich unter der maximalen Bremskraft bleibt. Dazu ist eine entsprechende Parametrierung erforderlich.

Bei der hier vorgestellten Berechnung des Sollaufbaugradienten wird die Fahrzeugeigennickdynamik bzw. werden die dynamischen Normalkraftänderungen berücksichtigt. Der Aufbaugradient wird dabei nicht in einer Closed-Loop-Regelung in Abhängigkeit von dem Radschlupf eingeregelt, da sich während der Anbremsphase die Normalkräfte an Vorder- und Hinterachse sehr schnell ändern können. Die hier vorgestellte Regelung über die Ableitung der Raddrehzahl weist eine hohe Dynamik auf. Des Weiteren ist es nicht in jeder Phase der Normalkraftänderung sinnvoll, einen bestimmten Schlupf einzuregeln. Befindet sich das Fahrzeug z.B. schon kurz vor dem Zurückfedern und die Normalkräfte an Vorderachse nehmen wieder ab, wird bei dem hier vorgestellten Ansatz ein zu steiler Aufbaugradient an dieser Achse vermieden, um einen sanften Übergang ins ABS zu gewährleisten. Das hier vorgestellte Konzept bietet eine hohe Robustheit und erfordert niedrige Applikationsaufwände für einen kurzen Bremsweg und zur Optimierung des ABS Anregelverhaltens.

Der hier vorgestellte Ansatz verbessert das ABS Anregelverhalten, indem eine Vorsteuerung die Grundaufbauform des Raddrucks jeder Achse auf die Normalkraftänderung des Fahrzeugs während des Anbremsvorgangs anpasst. Zusätzlich regelt ein Closed-Loop-Regler mit erhöhter Dynamik auftretende Toleranzen, wie beispielsweise ein Lüftspiel der Bremsbeläge, Toleranzen im Bremsenbeiwert und/oder einen Fahrbahnreibwert aus.

Ein achsspezifischer zeitvarianter Vorsteuergradient bestimmt die Grundform des PCA Druckaufbaugradienten zur Anpassung der Radbremsmomente an den Normalkraftaufbau während des Einnickvorgangs. Dieser charakteristische Solldruckverlauf kann auf Basis einer Zeitsteuerung für den schnellen Anbremsvorgang optimiert werden. Der radspezifische Korrekturmechanismus (Feedback-Controller) regelt Störungen mit hoher Dynamik um die charakteristische Grundform herum aus. Als Sollwert wird eine Radverzögerung innerhalb eines zeitabhängigen Schlupfbands eingeregelt. Die Grundform des Aufbaus wird über den Closed-Loop-Regler in Abhängigkeit von der Regelabweichung angepasst.

Als Sollwert für den Closed-Loop-Regler wird die Radverzögerung gewählt, womit schnell auf das Radverhalten reagiert werden kann. Innerhalb definierbaren Schlupfbändern kann der Sollwert über die PCA Aktivzeit vorgegeben werden. Damit kann zu Beginn der PCA Regelung mit hohen Soll- Radverzögerungen schnell Bremskraft aufgebaut werden, wobei kurz vor Erreichen des Normalkraftmaximums der Übergang ins ABS sensibler, mit weniger Radverzögerung als Sollwert, geregelt wird. Zusätzlich ist ein Maximal- und ein Minimal-Schlupfband in Abhängigkeit von der PCA Zeit definiert. Bei Überschreiten des Maximalschlupfs bzw. Unterschreiten des Minimalschlupfs werden die Regelverstärkungen erhöht, um bei zu hohem Schlupf ein sofortiges Druckhalten bzw. bei zu niedrigem Druck einen sehr steilen Aufbaugradienten zu erreichen.

In Fig. 4 ist ein Radgeschwindigkeitsverlauf eines Rads während der PCA Regelung mit entsprechenden Regelbereichen dargestellt. Charakteristisch dabei ist die Druckgradientenbegrenzung mit einer kontinuierlichen Gradientenänderung in Abhängigkeit von der Radverzögerung und einer sprungförmigen Gradientenanpassung bei Über- bzw. Unterschreiten von definierten Radschlupfgrenzen.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines Bremssystems (100) eines Fahrzeugs (102), wobei unter Verwendung eines einen Vordruck (114) am Bremssystem (100) abbildenden Vordruckwerts (106) und einer eine Bremsdynamik des Fahrzeugs (102) abbildenden Verarbeitungsvorschrift (108) ein Vorsteuerwert (110) für einen Bremsdruck (112) des Bremssystems (100) eingestellt wird, **dadurch gekennzeichnet, dass** ein Vorsteuergradient des Vorsteuerwerts (110) unter Verwendung eines Vordruckgradienten des Vordruckwerts (106) und der Verarbeitungsvorschrift (108) eingestellt wird, wobei die Verarbeitungsvorschrift (108) einen fahrzeugmodellspezifischen zeitlichen Normalkraftverlauf beim Bremsen des Fahrzeugs (102) und/oder eine fahrzeugmodellspezifische Nickdynamik beim Bremsen des Fahrzeugs (102) abbildet, wobei pro Radbremszylinder ein Sollwert (126) des Bremsdrucks (112) unter Verwendung des Vorsteuerwerts (110) und einer Ableitung der Raddrehzahl (402) des von dem Radbremszylinder gebremsten Rads individuell geregelt wird.

2. Verfahren gemäß Anspruch 1, bei dem pro Achse des Fahrzeugs (102) ein Vorsteuerwert (110) eingestellt wird.

3. Verfahren gemäß Anspruch 1 oder 2, bei dem der Vorsteuergradient begrenzt wird, wenn der Vordruckgradient größer als ein Grenzgradient ist.

4. Verfahren gemäß einem der vorhergehenden Ansprüche, bei dem der Sollwert (126) während einer Anbremszeit entsprechend dem Vorsteuerwert (110) eingestellt wird und nach Ablauf der Anbremszeit unter Verwendung des Vorsteuerwerts (110) und der Ableitung der Raddrehzahl (402) geregelt wird.

5. Verfahren gemäß einem der vorhergehenden Ansprüche, bei dem der Sollwert (126) so geregelt wird, dass die Raddrehzahl (402) innerhalb eines Schlupfkorridors (406) verringert wird.

6. Bremssystem (100), das dazu ausgebildet ist, das Verfahren gemäß einem der vorhergehenden Ansprüche in entsprechenden Einrichtungen auszuführen, umzusetzen und/oder anzusteuern.

7. Computerprogrammprodukt, das dazu eingerichtet ist, das Verfahren gemäß einem der Ansprüche 1 bis 5 auszuführen, umzusetzen und/oder anzusteuern.

8. Maschinenlesbares Speichermedium, auf dem das Computerprogrammprodukt gemäß Anspruch 7 gespeichert ist.

## Claims

1. Method for operating a braking system (100) of a vehicle (102), wherein a pilot control value (110) for a braking pressure (112) of the braking system (100) is adjusted using an inlet pressure value (106) representing an inlet pressure (114) on the braking system (100) and a processing specification (108) representing braking dynamics of the vehicle (102), **characterized in that** a pilot control gradient of the pilot control value (110) is adjusted using an inlet pressure gradient of the inlet pressure value (106) and the processing specification (108), the processing specification (108) representing a vehicle-model-specific normal force response over time when the vehicle (102) is braking and/or vehicle-model-specific pitching dynamics when the vehicle (102) is braking, wherein a setpoint value (126) of the braking pressure (112) is individually regulated per wheel brake cylinder using the pilot control value (110) and a derivative of the wheel speed (402) of the wheel braked by the wheel brake cylinder.

2. Method according to Claim 1, in which a pilot control value (110) is adjusted per axle of the vehicle (102) .

3. Method according to Claim 1 or 2, in which the pilot control gradient is limited if the inlet pressure gradient is greater than a limit gradient.

4. Method according to one of the preceding claims, in which the setpoint value (126) is adjusted in accordance with the pilot control value (110) during a braking time and is regulated using the pilot control value (110) and the derivative of the wheel speed (402) after the braking time has elapsed.

5. Method according to one of the preceding claims, in which the setpoint value (126) is regulated such that the wheel speed (402) is decreased within a slippage corridor (406) .

6. Braking system (100) designed to carry out, use and/or activate the method according to one of the preceding claims in corresponding devices.

7. Computer program product configured to carry out, use and/or activate the method according to one of Claims 1 to 5.

8. Machine-readable storage medium on which the computer program product according to Claim 7 is stored.

## Revendications

1. Procédé pour faire fonctionner un système de freinage (100) d'un véhicule (102), une valeur de commande pilote (110) pour une pression de freinage (112) du système de freinage (100) étant réglée en utilisant une valeur de pression d'admission (106) qui représente une pression d'admission (114) au niveau du système de freinage (100) et une prescription de traitement (108) qui représente une dynamique de freinage du véhicule (102), **caractérisé en ce qu'**un gradient de commande pilote de la valeur de commande pilote (110) est réglé en utilisant un gradient de pression d'admission de la valeur de pression d'admission (106) et la prescription de traitement (108), la prescription de traitement (108) représentant une évolution de la force normale dans le temps spécifique au modèle de véhicule lors du freinage du véhicule (102) et/ou une dynamique de tangage spécifique au modèle de véhicule lors du freinage du véhicule (102), une valeur de consigne (126) de la pression de freinage (112) étant régulée individuellement pour chaque cylindre de frein de roue en utilisant la valeur de commande pilote (110) et une dérivée de la vitesse de rotation de roue (402) de la roue freinée par le cylindre de frein de roue.

2. Procédé selon la revendication 1, une valeur de commande pilote (110) étant réglée pour chaque essieu du véhicule (102).

3. Procédé selon la revendication 1 ou 2, le gradient de commande pilote étant limité lorsque le gradient de pression d'admission est supérieur à un gradient limite.

4. Procédé selon l'une des revendications précédentes, la valeur de consigne (126) étant réglée conformément à la valeur de commande pilote (110) pendant un temps de freinage et étant régulée en utilisant la valeur de commande pilote (110) et la dérivée de la vitesse de rotation de roue (402) à l'issue du temps de freinage.

5. Procédé selon l'une des revendications précédentes, la valeur de consigne (126) étant régulée de telle sorte que la vitesse de rotation de roue (402) à l'intérieur d'un corridor de glissement (406) est réduite.

6. Système de freinage (100), lequel est configuré pour exécuter, mettre en œuvre et/ou commander le procédé selon l'une des revendications précédentes dans des dispositifs correspondants.

7. Produit de programme informatique, lequel est conçu pour exécuter, mettre en œuvre et/ou commander le procédé selon l'une des revendications 1 à 5.

8. Support de stockage lisible par machine sur lequel est enregistré le produit de programme informatique selon la revendication 7.
